# EUROPEAN PATENT SPECIFICATION

(11) **EP 3 748 753 B1**
(45) Date of publication and mention of the grant of the patent: **05.01.2022**
(21) Application number: 19382473.7
(22) Date of filing: 06.06.2019
(51) Int. Cl.: H01M 8/1018, H01M 8/18

(54) **AN ALKALINE FLOW BATTERY ASSEMBLY**
ALKALISCHE FLUSSBATTERIEANORDNUNG
ENSEMBLE DE BATTERIE À FLUX ALCALIN

(43) Date of publication of application: 09.12.2020
(73) Proprietor: Energy Storage Solutions, SL, 28108 Alcobendas (Madrid) (ES)
(72) Inventor: Ventosa Arbaizar, Edgar, 28935 Móstoles (Madrid) (ES); Pérez Antolín, Daniel, 28935 Móstoles (Madrid) (ES); García Rodríguez, Guzmán, 28935 Móstoles (Madrid) (ES); Palma del Val, Jesús, 28935 Móstoles (Madrid) (ES)
(74) Representative: Sahuquillo Huerta, Jesús

(56) References cited:
- WO-A1-2015/148357
- US-A1- 2012 077 079
- US-A1- 2018 358 621
- WENTAO DUAN ET AL: "A symmetric organic-based nonaqueous redox flow battery and its state of charge diagnostics by FTIR", JOURNAL OF MATERIALS CHEMISTRY A, vol. 4, no. 15, 1 January 2016 (2016-01-01), pages 5448-5456, XP055288689, GB ISSN: 2050-7488, DOI: 10.1039/C6TA01177B

## Description

The present invention relates to the field of batteries. More specifically, the present invention relates to the field of redox-flow batteries intended to decrease the cost of the electrochemical reactor of alkaline flow batteries while maintaining long cycle life.

### Background of the invention

Energy storage technologies have become of vital importance for a variety of applications ranging from integration of intermittent renewable energy sources in the electrical grid to portable electronics. For stationary energy storage applications, redox flow batteries (RFB) are especially suitable due to the long cycle life and the independent scalability of energy and power. In an RFB, electrical energy is stored as chemical energy in electroactive species that are dissolved in the electrolyte. The state-of-art RFB is the all-vanadium redox flow battery (AVRFB), which employs redox electrolytes consisting in vanadium species dissolved in strong acidic media [1]. Electrochemical performances of AVRFBs are competitive for stationary applications; however, vanadium is considered to be a strategic/critical material for the US government [2] as well as the EU commission [3].

In addition, the corrosive vanadium electrolytes are not environmentally friendly. Therefore, finding alternative chemistries for redox flow battery has become of tremendous interest. Electroactive species based on organic molecules and non-critical elements in alkaline media have attracted much attention in recent years. Several chemistries have been demonstrated to deliver promising performances. All these systems use potassium ferrocyanide (a food additive, see e.g. [12]) as active species in the positive compartment and an organic redox compound in the negative compartment, including anthraquinone - K₄Fe(CN)₆ [4] vitamin B- derivatives - K₄Fe(CN)₆ [5] alloxazine - K₄Fe(CN)₆ [6] and phenazine-derivatives - K₄Fe(CN)₆ [7].

Cation-selective membranes (CSMs) are the state-of-the art element to separate and avoid short-circuit between positive and negative electrodes in alkaline flow batteries. However, CSMs are expensive (e.g. the commercial product named Nafion^{®} which is a brand name for a sulfonated tetrafluoroethylene-based fluoropolymer-copolymer discovered in the late 1960s by Walther Grot of DuPont). Indeed, CSMs are the most expensive element in the electrochemical reactor and the major contributor to the cost of the stack model [8][9]. In addition, the ionic conductivity of these cation-selective membranes in alkaline media is lower than that in acid media due to the larger size of the K⁺ and Na⁺, with respect to H⁺, limiting the maximum current density at which the electrochemical reactor can be operated. The operating current density has a tremendous impact in the cost of the stack as well; the lower the current density, the larger reactor area and the higher cost.

In alkaline media, this technical problem has solely been addressed by increasing the ionic conductivity of CSMs by subjecting the membrane to chemical treatments [7]. However, these approaches only lead to incremental improvements since current densities were limited to 100 mA cm⁻². In neutral pH, the use of cheap microporous separators (MPSs) was enabled by anchored electro-active species in a polymer chain [10]. If the size of the polymer is larger than the pore size of a microporous separators, crossing of species between compartments will be prevented by size exclusion.

The document US2018358621A1 discloses an organic flow cell battery having a material comprising an organic molecule that can be used as the electroactive redox material for both electrodes of the battery. By enabling two-electron processes both of the oxidation and reduction to occur in a single molecule, a total of 4-electron transitions is achieved, which allows the organic molecule to be used on both sides of the separator, reducing material costs and allowing the battery to be charge in either direction with equal ease.

### Description of the invention

It is an object of the invention to provide an alkaline flow battery assembly to solve the technical problems of the prior art. More concretely, the cation-selective membranes (CSMs) currently used in alkaline flow batteries are expensive. Indeed, CSMs are the most expensive element in the electrochemical reactor and the major contributor to the cost of the stack model. In addition, the ionic conductivity of these cation-selective membranes in alkaline media is lower than that in acid media due to the larger size of the K⁺ and Na⁺, with respect to H⁺, limiting the maximum current density at which the electrochemical reactor can be operated. The operating current density has a tremendous impact in the cost of the stack as well; the lower the current density, the larger reactor area and the higher cost. The technical problem is solved by the assembly of claim 1. In the dependent claims it is disclosed other embodiments of the assembly.

The present invention is based on the use of cheap microporous separators (MPSs), instead of expensive CSMs, will result in remarkable decrease in cost. In addition, the conductivity of Microporous separator is expected to be much higher than that of CSMs in alkaline media, which will allow the battery to be operated at higher current densities. However, the crossing of species over microporous separators is not selective to cations, but also allows active redox species to diffuse through microporous separators driven by concentration gradient of active species between the two compartments as a result, the installed energy capacity of the battery will gradually decrease falling below specifications relatively fast.

The present invention proposes the combination of identical redox electrolytes composed of two electro-active species and microporous separators. The use of identical redox electrolytes (IREs) in the two compartments will cancel the concentration gradient of active species that drives diffusion across the microporous separators. In addition, IREs will allow balancing of electrolyte, which is currently another limitation in alkaline flow batteries. So, it is possible to reach a battery with cycle-life.

The invention brings three main advantages over the state-of-the-art in alkaline flow batteries: (a) Cost of the electrochemical reactor is remarkable decreased by using MPSs, which are two-order of magnitude cheaper than currently used CSMs; (b) the maximum operating current density is also increased due to the higher ionic conductivity of MPSs in alkaline media. An increase in current density leads to smaller size of the electrochemical reactor and, thus, lower cost; and (c) the maximum operating temperature is increased. CSMs start to lose selectivity above 40 °C. This is not an issue in vanadium-flow batteries because the operating temperature is usually limited to 35 °C due to the precipitation of vanadium species above this temperature. However, the solubility of emerging electro-active species increases with increased temperature. Thus, it is beneficial to increase the maximum operating temperature so that energy losses in cooling down the systems can be minimized.

### Brief description of the figures

There follows a very brief description of a series of drawings that help to provide a better understanding of the invention and which are associated expressly with an embodiment of said invention that is presented as a non-limiting example thereof.
**Figure 1****.** Scheme of the alkaline flow battery assembly object of the present invention.
**Figure 2****.** Schematic illustration of an identical electrolyte. Species A and B are electro-active in the negative and positive compartment, respectively. The presence of species B and A in the negative and positive compartment, respectively, allows the concentration gradient to be canceled minimizing the crossover of species between the two compartments.
**Figure 3****.** Voltage profile of the first charge-discharge cycle of an alkaline flow battery using identical electrolyte based on (a) 2,5 dihydroxy- benzoquinone and potassium ferrocyanide and (b) phenazine-derivative and potassium ferrocyanide.
**Figure 4.** (a) Voltage profile of a charge-discharge cycle and (b) evolution of the energy density with the number of cycles for an alkaline flow battery using identical electrolyte based on 2 hydroxy- anthraquinone and potassium ferrocyanide.
**Figure 5.** (a) Voltage profile of a charge-discharge cycle and (b) evolution of the energy density with the number of cycles for an alkaline flow battery using identical electrolyte based on 2,6 dihydroxy- anthraquinone and potassium ferrocyanide.
**Figure 6.** (a) Voltage profile of a charge-discharge cycle and (b) evolution of the energy density with the number of cycles for an alkaline flow battery using identical electrolyte based on 2 hydroxy- anthraquinone and potassium ferrocyanide.
**Figure 7****.** Evolution of energy density with number of cycles of an alkaline flow battery using identical electrolyte based on 2,6 dihydroxy- anthraquinone and potassium ferrocyanide and an MPS.
**Figure 8****.** Voltage profile of an alkaline flow battery using identical electrolyte based on 2,6 dihydroxy- anthraquinone and potassium ferrocyanide and MPS at 150, 180 and 200 mA cm⁻².

### Description of a detailed embodiment of the invention

In the prior art, batteries can be categorized in sealed (e.g. Li-ion and NiMH batteries) and redox flux batteries. In flow batteries, electro-active species are stored in external reservoirs and pumped into the electrochemical reactor for energy conversion -electrochemical conversion-. Active species are typically dissolved in the electrolyte of flow batteries so that they can be easily transferred between external reservoir and the electrochemical reactor. The CSMs (cation-selective membranes) are needed to confine active species in the electrolyte of the positive and negative compartment avoiding mixing of charged species. On the other hand, high-energy solid active species can be used in sealed batteries since these species do not need to be moved. Solid active material is easily confined in the positive and negative compartment by using microporous separators that avoid mixing of charged species simply by size exclusion: solid active materials are larger than pore size of the microporous separator. Consequently, expensive CSMs (300$ - 400$ m⁻²) are typically used in redox flow batteries while cheap microporous separator (3$ - 4$ m⁻²) can be used in sealed batteries.

In alkaline media, the lower ionic conductivity of CSMs with respect to acidic media reduces the maximum operating current density and thus increases the size of the electrochemical reactor. Therefore, solutions need to be found if alkaline flow batteries are to be economically competitive since large areas of expensive CSMs are currently needed. Substitution of CSMs by microporous separators could lead to a remarkable decrease in cost but mixing of positive and negative electrolyte will gradually occur since microporous separator allows dissolved active species to diffuse through it.

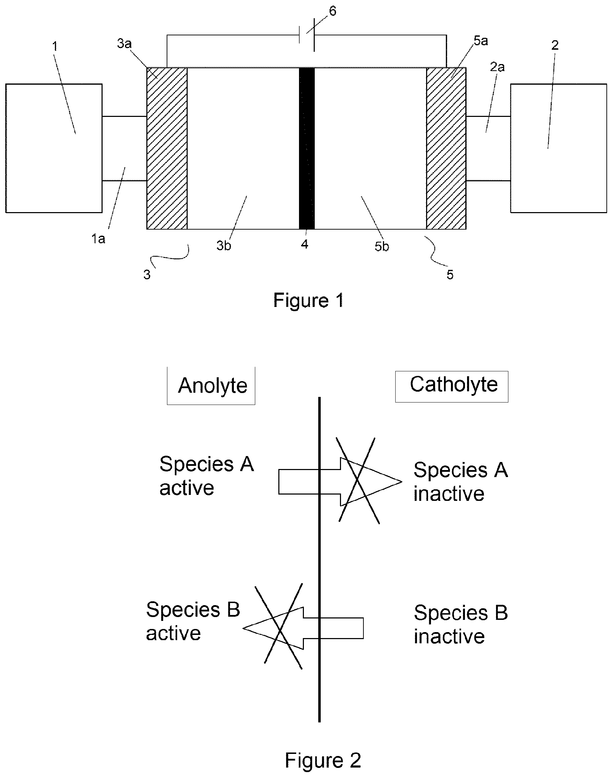

In the **figure 1** it is shown a schematic view of an alkaline flow battery assembly according with the invention. The assembly comprises an electrochemical reactor, comprising a positive compartment 5 and a negative compartment 3 separated by a microporous separator 4. The positive compartment 5 further comprises a positive electrode 5a and houses catholyte 5b. Analogously, the negative compartment 3 comprises a negative electrode 3a and houses anolyte 3b. The positive electrode 5a and the negative electrode 3a are connected to a power/load source 6.

Advantageously, the positive compartment 5 is connected through a conduct 2a with a container 2 in such a way that the container 2 can provide catholyte stored in the container 2 to the positive compartment 5 in fluid communication. Analogously, the negative compartment 3 is connected through a conduct 1a to a container 1 in such a way that the container 1 can provide anolyte stored in the container 1 to the negative compartment 3 in fluid communication. The assembly is further characterized by the fact that the anolyte and the catholyte are an identical alkaline redox solution.

In a typical state-of-the-art redox flow battery, a first electro-active species A is employed in the negative compartment (anolyte) and a second electro-active species B is used in the positive compartment (catholyte). As the energy density of the flow battery increases with increasing concentration of electro-active species, the concentration of both electro-active species is as high as possible. This difference in concentration drives diffusion of electro-active species to the opposite compartment: species A diffuse to the positive compartment whereas species B diffuse to the negative compartment. The crossing of species leads to a fast decrease in the installed energy capacity of the systems below specifications.

However, the invention advantageously proposes the use of identical electrolytes (identical alkaline redox solutions) for the positive and negative compartments 3,5. The identical electrolytes contain both species A and B. According with the scheme shown in the **figure 2** although species A is not electro-active in the positive compartment 5 nor the species B in the negative compartment 3, their presence in the opposite compartment cancels the concentration gradient of electro-active species between compartments, which enables the use of cheap microporous separators 4 in alkaline flow batteries. In addition, balancing of electrolyte of negative and positive compartment 3,5 after a certain number of cycles enables the systems to return to the initial state.

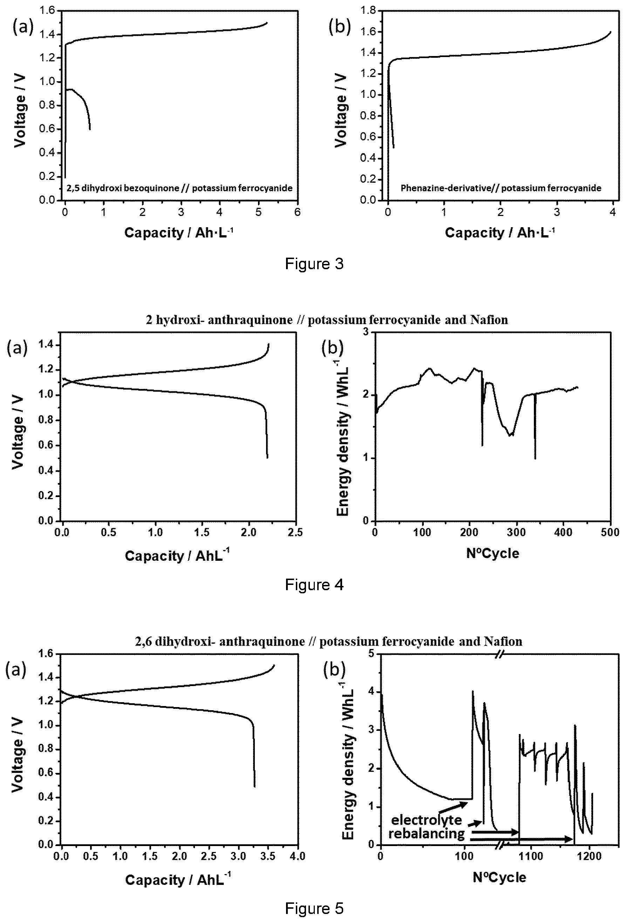

Nonetheless, it is founded out that all electro-active species are not compatible, which make a preliminary study of compatibility necessary. It is understood in the context of the present invention that "compatible" or "compatibility" between two electro-active species A and B means that the presence of species B and A in the negative and positive compartment, does not alter the electrochemical performance of the individual species, e.g. electrochemical reversibility upon oxidation and reduction. As way of example, a flow battery based on 2,5 dihydroxy-benzoquinone (species A) and potassium ferrocyanide (species B) was reported to deliver promising performance using CSM and having each electro-active species confined in its corresponding compartment [11]. However, the alkaline flow battery using identical electrolyte based on these species does not function **-figure 3a-.** When one of the species is charged, an irreversible reaction with the other species in discharge state takes place. Another example of incompatibility in identical electrolyte between two electroactive species is the 7,8-dihydroxyphenazine-2-sulfonic acid (species A) and potassium ferrocyanide (species B) - figure 3b- which also was reported to function when each electro-active species is confined in each compartment [7].

On the other hand, anthraquinones and potassium ferrocyanide were found to be compatible as species A and B, respectively, in identical electrolytes. **Figure 4** shows the voltage profile and the evolution of the energy density upon cycling for an alkaline battery using identical electrolyte based on 2 hydroxy-anthraquinone and potassium ferrocyanide as species A and B, respectively. Both species are present in both compartments 3,5 revealing complete compatibility of species. The identical electrolyte based on 2,6 dihydroxy-anthraquinone and potassium ferrocyanide was also found to be compatible **(****Figure 5****).** It should be noted that an electrochemical reactor containing CSM instead of a microporous separator 4 was used to simplify the compatibility studies.

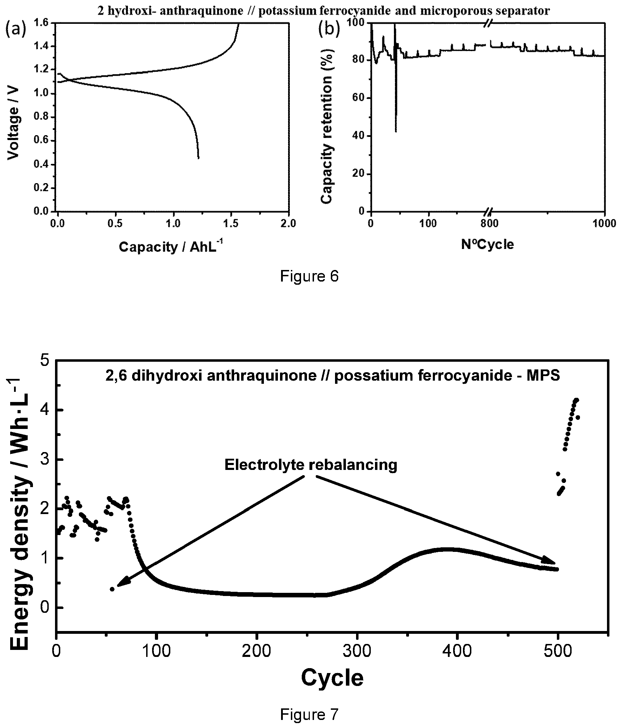

An alkaline flow battery using microporous separator 4 and identical electrolyte based on 2 hydroxy-anthraquinone and potassium ferrocyanide was evaluated **(****Figure 6****).** This particular experiment was carried out in static conditions to avoid crossover the electrolyte due to pressure differences between the two compartments. Figure 6 shows that the capacity fade is negligible upon 1.000 cycles demonstrating the compatibility between this identical electrolyte and the use of microporous separators 4.

An alkaline flow battery using a microporous separator 4 and identical electrolyte based on 2,6 dihydroxy-anthraquinone and potassium ferrocyanide was evaluated **(****Figure 7****).** After 80 cycles, the energy density of the systems decreased rapidly due to unbalancing of the volume of electrolyte in positive and negative compartment. After 500 cycles, the identical electrolyte was rebalanced by simply mixing the content of both reservoirs. The energy density of the systems was recovered showing that specifications of the battery are retained by combining identical electrolyte and microporous separator 4.

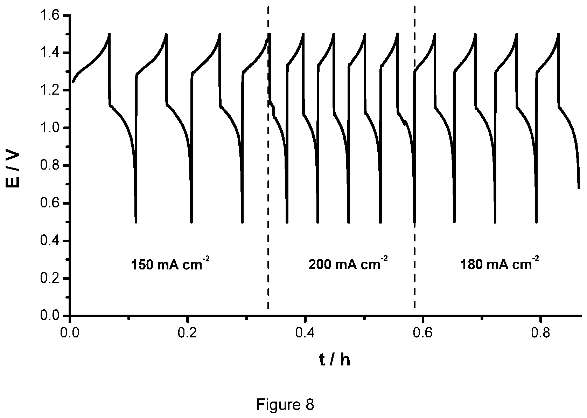

An additional benefit of using a microporous separator 4 is the high current density at which the systems can be operated. **Figure 8** shows the voltage profile of a battery that combines an identical electrolyte (2,6 dihydroxy-anthraquinone and potassium ferrocyanide) and a microporous separator 4. Current densities as high as 200 mA cm⁻² were achieved, which is well above the state of the art in redox flow batteries (ca. 100 mA cm⁻²), maintaining an energy efficiency of 69 %. The difference in ionic areal resistance between CSM (*Nafion*^{®}*212*) and a microporous separator (*Celgard*^{®} *3401*) was measured to be 2.3 Ω cm⁻². When operating at 200 mA cm⁻² the overpotential of a cell using a CSM instead of a microporous separator will be 460 mV higher, which will lead to impede charging the battery due to the promotion of side reactions, e.g. hydrogen evolution reaction.

### References

[1] Ding et al., J. Phys. Chem. Lett. 2013, 4, 1281
[2] Final List of Critical Minerals 2018: https://www.federalregister.gov/documents/2018/05/18/2018-10667/final-list-of-critical-minerals-2018
[3] List of Critical Raw Materials for the EU: https://eur-lex.europa.eu/legal-content/EN/TXT/?uri=CELEX:52017DC0490
[4] Lin, et al. Science, 2015, 349. 1529-1532
[5] Orita, et al., Nat. Commun. 2016, 7, 13230
[6] Lin, et al., Nat. Energy 2016, 1, 16102
[7] Hollas, et al., Nat. Energy 2018, 3, 508
[8] Viswanathan et al., J. Power Sources, 2014, 247, 1040
[9] Ha et al., J. Power Sources, 2015, 296, 122
[10] Janoschka, et al., Nature, 2015, 527, 78.
[11] Yang, et al., Adv. Energy Mater., 2017, 8, 1702056
[12] World Health Organ. Tech. Rep. Ser., 1974, 539, 1-40

## Claims

1. An alkaline flow battery assembly comprising an electrochemical reactor including a positive compartment (5) and a negative compartment (3);
wherein the positive compartment (5) comprises a positive electrode (5a) and houses catholyte (5b) whereas the negative compartment (3) comprises a negative electrode (3a) and houses anolyte (3b);
wherein the negative compartment (3) is connected through a conduct (1a) in fluid communication to a first container (1) storing anolyte whereas the positive compartment (5) is connected through a conduct (2a) in fluid communication with a second container (2) storing catholyte;
**characterized in that** the anolyte and the catholyte are alkaline redox solutions both comprising a first electro-active species A and a second electro-active species B, being the species A, an anthraquinone-based compound, and the species B a potassium ferrocyanide; and wherein the negative compartment (3) and the positive compartment (5) are separated by means of a microporous separator (4).

2. The assembly of claim 1 wherein the anthraquinone is one selected from: 2,6 dihydroxy-anthraquinone or 2 dihydroxy-anthraquinone.

3. The assembly of any of claims 1 to 2 wherein it is arranged to balance the anolyte and the catholyte by simply mixing of the content of the first and second containers (1,2).

4. Use of an alkaline flow battery assembly according to any of the claims 1-3 to store electricity connecting the positive electrode (5a) and the negative electrode (3a) to a power source (6).

5. Use of an alkaline flow battery assembly according to any of the claims 1-3 to deliver electricity connecting the positive electrode (5a) and the negative electrode (3a) to a load (6).

## Patentansprüche

1. Alkalische Durchflussbatterieanordnung mit einem elektrochemischen Reaktor, der ein positives Fach (5) und ein negatives Fach (3) umfasst;
wobei das positive Kompartiment (5) eine positive Elektrode (5a) umfasst und einen Katholyten (5b) enthält, während das negative Kompartiment (3) eine negative Elektrode (3a) umfasst und einen Anolyten (3b) enthält;
wobei die negative Kammer (3) über eine Leitung (1a) in Fluidverbindung mit einem ersten Behälter (1), der Anolyt speichert, verbunden ist, während die positive Kammer (5) über eine Leitung (2a) in Fluidverbindung mit einem zweiten Behälter (2), der Katholyt speichert, verbunden ist;
**dadurch gekennzeichnet, dass** der Anolyt und der Katholyt alkalische Redoxlösungen sind, die beide eine erste elektroaktive Spezies A und eine zweite elektroaktive Spezies B umfassen, wobei die Spezies A eine Verbindung auf Anthrachinonbasis und die Spezies B ein Kaliumferrocyanid ist; und wobei das negative Kompartiment (3) und das positive Kompartiment (5) mittels eines mikroporösen Separators (4) getrennt sind.

2. Die Anordnung nach Anspruch 1, wobei das Anthrachinon ausgewählt ist aus: 2,6-Dihydroxyanthrachinon oder 2-Dihydroxyanthrachinon.

3. Die Anordnung nach einem der Ansprüche 1 bis 2, wobei sie so beschaffen ist, dass sie den Anolyten und den Katholyten durch einfaches Mischen des Inhalts des ersten und des zweiten Behälters (1, 2) ausgleicht.

4. Verwendung einer alkalischen Durchflussbatterie nach einem der Ansprüche 1 bis 3 zur Speicherung von Elektrizität, die die positive Elektrode (5a) und die negative Elektrode (3a) mit einer Stromquelle (6) verbindet.

5. Verwendung einer alkalischen Durchflussbatterie nach einem der Ansprüche 1 bis 3 zur Lieferung von Elektrizität, die die positive Elektrode (5a) und die negative Elektrode (3a) mit einer Last (6) verbindet.

## Revendications

1. Ensemble de batterie de flux alcaline comprenant un réacteur électrochimique comprenant un compartiment positif (5) et un compartiment négatif (3) ;
dans lequel le compartiment positif (5) comprend une électrode positive (5a) et abrite un catholyte (5b), tandis que le compartiment négatif (3) comprend une électrode négative (3a) et abrite un anolyte (3b) ;
dans lequel le compartiment négatif (3) est relié par un conduit (1a) en communication fluidique avec un premier récipient (1) stockant un anolyte, tandis que le compartiment positif (5) est relié par un conduit (2a) en communication fluidique avec un second récipient (2) stockant un catholyte ;
**caractérisé en ce que** l'anolyte et le catholyte sont des solutions redox alcalines comprenant toutes deux une première espèce électro-active A et une seconde espèce électro-active B, l'espèce A étant un composé à base d'anthraquinone, et l'espèce B un ferrocyanure de potassium ; et dans lequel le compartiment négatif (3) et le compartiment positif (5) sont séparés au moyen d'un séparateur microporeux (4).

2. Assemblage selon la revendication 1, dans lequel l'anthraquinone est choisie parmi : la 2,6 dihydroxy-anthraquinone ou la 2 dihydroxy-anthraquinone.

3. Ensemble de l'une quelconque des revendications 1 à 2, dans lequel il est prévu d'équilibrer l'anolyte et le catholyte par simple mélange du contenu des premier et second récipients (1, 2).

4. Utilisation d'un ensemble de batterie d'écoulement alcaline selon l'une quelconque des revendications 1 à 3 pour stocker de l'électricité reliant l'électrode positive (5a) et l'électrode négative (3a) à une source d'énergie (6).

5. Utilisation d'un ensemble de batterie d'écoulement alcaline selon l'une quelconque des revendications 1-3 pour délivrer de l'électricité reliant l'électrode positive (5a) et l'électrode négative (3a) à une charge (6).
